(19) Europäisches Patentamt
European Patent Office
Office européen des brevets

(11) **EP 2 693 678 B1**

(12) **EUROPEAN PATENT SPECIFICATION**

(45) Date of publication and mention
of the grant of the patent:
**07.08.2024 Bulletin 2024/32**

(21) Application number: **13177722.9**

(22) Date of filing: **24.07.2013**

(51) International Patent Classification (IPC):
**H04L 5/00** (2006.01)    **H04W 72/12** (2023.01)

(52) Cooperative Patent Classification (CPC):
**H04L 5/0037; H04L 5/0055; H04L 5/0091;**
**H04W 72/20**

(54) **Control channel element indexing scheme**

Steuerkanalementindexierungsschema

Schéma d'indexation d'élément de canal de commande

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **03.08.2012 PCT/EP2012/065234**

(43) Date of publication of application:
**05.02.2014 Bulletin 2014/06**

(73) Proprietor: **Nokia Solutions and Networks Oy**
**02610 Espoo (FI)**

(72) Inventors:
• **Lunttila, Timo Erkki**
**02200 Espoo (FI)**
• **Tiirola, Esa Tapani**
**90450 Kempele (FI)**
• **Hooli, Kari Juhani**
**90540 Oulu (FI)**

(74) Representative: **Page White Farrer**
**Bedford House**
**21a John Street**
**London WC1N 2BF (GB)**

(56) References cited:
**WO-A1-2011/137383**

• **SESIA ET AL: "LTE - The UMTS Long Term**
**Evolution: From Theory to Practice", 31 January**
**2012, JOHN WILEY AND SONS, Chichester, GB,**
**ISBN: 978-0-470-74289-1, XP002695458**

• **SAMSUNG: "HARQ-ACK PUCCH Resources in**
**Response to ePDCCH Detections", 3GPP DRAFT;**
**R1-122259 A_N FOR EPDCCH, 3RD**
**GENERATION PARTNERSHIP PROJECT (3GPP),**
**MOBILE COMPETENCE CENTRE ; 650, ROUTE**
**DES LUCIOLES ; F-06921 SOPHIA-ANTIPOLIS**
**CEDEX ; FRANCE, vol. RAN WG1, no. Prague,**
**Czech Republic; 20120521 - 20120525, 12 May**
**2012 (2012-05-12), XP050600522**

• **PANTECH: "PUCCH resource allocation in**
**response to E-PDCCH", 3GPP DRAFT;**
**R1-122456, 3RD GENERATION PARTNERSHIP**
**PROJECT (3GPP), MOBILE COMPETENCE**
**CENTRE ; 650, ROUTE DES LUCIOLES ; F-06921**
**SOPHIA-ANTIPOLIS CEDEX ; FRANCE, vol. RAN**
**WG1, no. Prague, Czech Republic; 20120521 -**
**20120525, 12 May 2012 (2012-05-12),**
**XP050600709**

• **ZTE: "Consideration for PUCCH enhancement",**
**3GPP DRAFT; R1-122146 CONSIDERATION FOR**
**PUCCH ENHANCEMENT, 3RD GENERATION**
**PARTNERSHIP PROJECT (3GPP), MOBILE**
**COMPETENCE CENTRE ; 650, ROUTE DES**
**LUCIOLES ; F-06921 SOPHIA-ANTIPOLIS**
**CEDEX ; FRANCE, vol. RAN WG1, no. Prague,**
**Czech Republic; 20120521 - 20120525, 12 May**
**2012 (2012-05-12), XP050600414**

• **ASUSTEK: "PUCCH Resource Allocation**
**Corresponding to ePDCCH", 3GPP DRAFT;**
**R1-122614 PUCCH RESOURCE ALLOCATION**
**CORRESPONDING TO EPDCCH_V1, 3RD**
**GENERATION PARTNERSHIP PROJECT (3GPP),**
**MOBILE COMPETENCE CENTRE ; 650, ROUTE**
**DES LUCIOLES ; F-06921 SOPHIA-ANTIPOLIS**
**CEDEX ; FRANCE, vol. RAN WG1, no. Prague,**
**Czech; 20120501, 12 May 2012 (2012-05-12),**
**XP050600800**

**Description**

Field of the invention

The present invention relates to a method, an apparatus, and a computer program product. In particular, a method, an apparatus, and a computer program product for a control channel element indexing scheme.

Background of the invention

Enhanced PDCCH (ePDCCH) is a Rel-11 feature currently standardized in the 3GPP in the Enhanced downlink control channel(s) for LTE Work Item. The main motivation behind ePDCCH is to improve control channel performance (especially capacity and coverage) in the case of new Rel-10/11 features such as CoMP (Coordinated Multipoint Transmission/Reception), DL MIMO (Downlink Multiple Input Multiple Output), Heterogeneous Network and Carrier Aggregation (including extension carrier). In the case ePDCCH is used to schedule downlink data on PDSCH (this is the main use case for ePDCCH), there is a need to provide uplink control channel resource(s) for HARQ-ACK transmitted on PUCCH as response to received PDSCH. The topic has received attention in the last couple of 3GPP RAN WG1 meetings #69 and #69bis.

The latest agreement of these meetings is that the PUCCH Format 1a/1b resource for HARQ-ACK transmission in response to ePDCCH-scheduled PDSCH is at least partly implicitly determined. Which resource index could be used therefore still has to be further discussed. Further, it has been agreed that specification support for avoiding collisions of PUCCH format 1a/1b resources corresponding to ePDCCH and PDCCH is provided. However, it still has to be discussed how to provide such a collision avoidance.

In LTE Rel-8 the implicit PUCCH resource determination is based on the lowest index of the scheduling CCE. With ePDCCH, the CCE concept is replaced with so called eCCEs (enhanced Control Channel Elements). The present invention presents an indexing scheme for ePDCCH eCCEs necessary for supporting implicit resource allocation for HARQ-ACK.

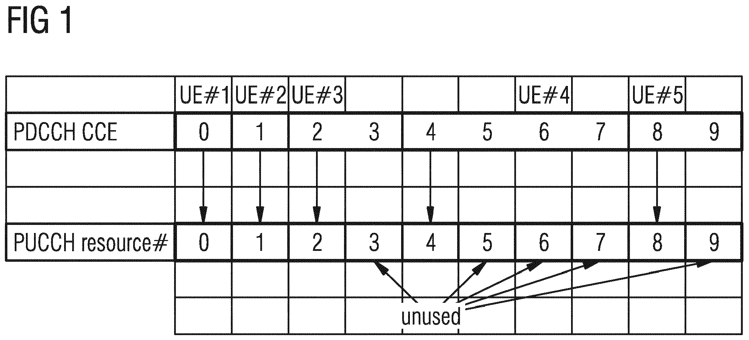

The PUCCH resource allocation for dynamically scheduled PDSCH ACK/NACKs in LTE Release 8 and beyond is based on implicit mapping. To be specific, the index of the lowest PDCCH Control Channel Element (CCE) scheduling the PDSCH determines directly the index of the PUCCH resource used for ACK/NACK signalling, i.e. there is a one-to-one mapping between the CCE and the PUCCH resource indices. An example of this basic principle is illustrated in Fig. 1.

The implicit resource allocation has the benefit that it minimizes the UL overhead as dedicated PUCCH resources do not need to be reserved for each UE. The basic principle is very attractive with ePDCCH as well. As one of the main motivations for the introduction of ePDCCH is increased control channel capacity, the number of scheduled users is expected to increase making efficient PUCCH usage even more important.

As mentioned above, the latest agreement in the 3GPP confirms that DL HARQ-ACK resource allocation on PUCCH will be done at least partly implicitly also in the case of ePDCCH.

Regarding the structure of the ePDCCH, there has been an agreement that at least for the case localized allocations, there are typically 4 (potentially 2 or 3 in some specific cases) eCCEs on a PRB. This results in having potentially a very large number of possible eCCE locations and, assuming one-to-one mapping between an index of the eCCE and the index of the PUCCH resource, in an excessively large UL signalling overhead. Therefore, it seems to be clear that there is a need to develop a more efficient eCCE indexing scheme.

As mentioned above, the implicit ACK/NACK resource allocation in LTE Release 8 is based on the CCE indexing. However, such indexing scheme does not exist currently for ePDCCH.

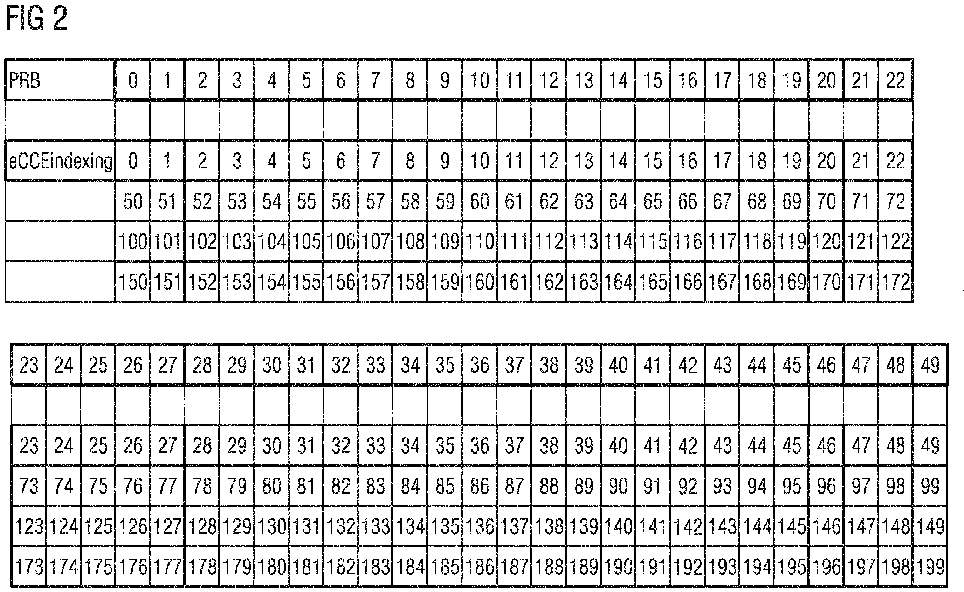

In LTE Rel-8, the PDCCH resources are divided into CCEs which are then simply numbered. However, such an approach is not an attractive one in the case of ePDCCH as due to the nature of ePDCCH the number of resources and hence also the UL overhead would easily become excessive. This is shown in Figure 2 which illustrates a straightforward extension of Rel-8 approach to support ePDCCH.

Sesia et al: "LTE - The UMTS Long Term Evolution: From Theory to Practice", 31 January 2012, discloses that the master information block may be carried on the PBCH, wherein the master information block consists of the downlink system bandwidth. Each PDCCH may be transmitted using one or more control channel elements (CCEs). The number of CCEs aggregated for transmission of a particular PDCCH is determined by the eNB.

Samsung: "HARQ-ACK PUCCH Resources in Response to ePDCCH Detections", 3GPP Draft, R1-122259 A_N For ePDCCH, 12 May 2012, discloses a determination of a PUCCH resource for a UE to transmit an HARQ-ACK signal in response to respective ePDCCH detection. To avoid additional PUCCH overhead, the same resources as for transmissions of HARQ-ACK signals in response to PDCCH detections can be used. Collisions can be avoided by introducing an ARI field in each DCI format scheduling PDSCHs.

WO 2011/137383 A1 discloses that a wireless transmit/receive unit (WTRU) may operate in a heterogeneous wireless communication network (HetNet). The WTRU may detect the presence of an extended physical downlink control channel (E-PDCCH) and may decode a physical downlink control channel (PDCCH) upon detecting the E-PDCCH. The WTRU may obtain scheduling information of the E-PDCCH on a physical downlink shared control channel (PDSCH) from the decoded PDCCH.

Pantech: "PUCCH resource allocation in response to E-PDCCH", 3GPP Draft, R1-122456, 12 May 2012, discloses there are three different PUCCH formats (i.e. PUCCH format 1/1a/1b/2/2a/2b/3) to support UCI transmission. Among those PUCCH formats, the PUCCH resources for PUCCH format 1/1a/1b transmission can be derived from implicit manner which is based on lowest CCE index used to construct corresponding PDCCH to schedule the PDSCH transmission. By taking the above point into account, the PUCCH resource mapping rule may be clarified to avoid a possible PUCCH resource collision between legacy UE and Rel-11 UE configured E-PDCCH.

ASUSTek: "PUCCH Resource Allocation Corresponding to ePDCCH", 3GPP Draft, R1-122614, 12 May 2012, discloses that, for ePDCCH, the corresponding PUCCH 1a/1b resource can be implicitly determined. Furthermore, the eCCE index for indicating PUCCH 1a/1b resource can be numbered within the search space configured for a UE.

Summary of the Invention

The invention is defined by the independent claims. Particular embodiments are set out in the dependent claims.

Brief Description of the Drawings

These and other objects, features, details and advantages will become more fully apparent from the following detailed description of embodiments of the present invention which is to be taken in conjunction with the appended drawings, in which:

Fig. 1 is a diagram illustrating a principle of implicit ACK/NACK resource allocation on PUCCH in LTE Rel 8.
Fig. 2 is a diagram illustrating an exemplary eCCE indexing assuming 50 PRBs and 4 eCCEs per PRB.
Fig. 3 is a diagram illustrating a principle of cell specific eCCE indexing according to the first embodiment of the present invention.
Fig. 4 is a diagram illustrating an example of many-to-one mapping between eCCE index and PUCCH index according to the first embodiment of the present invention.
Fig. 5 is a diagram illustrating a principle of UE specific eCCE indexing according to a second embodiment of the present invention.
Fig. 6 is a diagram illustrating an example of the indexing in case of distributed ePDCCH according to the second embodiment of the present invention.
Fig. 7 is a flowchart illustrating a method according to certain embodiments of the present invention.
Fig. 8 is a flowchart illustrating another method according to certain embodiments of the present invention.
Fig. 9 is a block diagram showing an example of an apparatus according to certain embodiments of the present invention.

Detailed Description

The aim of the present invention is to develop eCCE indexing scheme that provides support for resource efficient, signalling efficient and flexible implicit HARQ-ACK resource allocation.

The crystallization of the present invention is to provide eCCE indexing definitions and the related signalling to enable implicit HARQ-ACK resource allocation for PDSCH data packets scheduled via ePDCCH.

Basically, the proposed indexing scheme contains the following steps:

• Signalling to at least one UE in the cell information regarding which PRBs may carry ePDCCH.
• Reserving a number of eCCEs per allocated PRB according to a pre-defined rule and/or signalling defined.
• Determining at least one eCCE index according to a pre-defined rule and signalling received.
• Determining at least one PUCCH index based on eCCE index according to a pre-defined rule and signalling received.

Similar method steps are needed at both ends of the uplink radio link. In other words, both UE and eNB implement the indexing scheme similarly in order to transmit and receive HARQ-ACK on the desired resource.

In the following there are described two alternative implementations for the considered invention, namely 'Cell specific eCCE indexing' and 'UE-specific eCCE indexing'.

First embodiment

In the following, cell specific eCCE indexing according to a first embodiment of the present invention will be described.

According to the first embodiment, it is assumed that the eCCE indexing is done on a cell, or more generically on a transmission point (TP) level. Each ePDCCH capable UE in the cell / TP has the same understanding of the eCCE signaling.

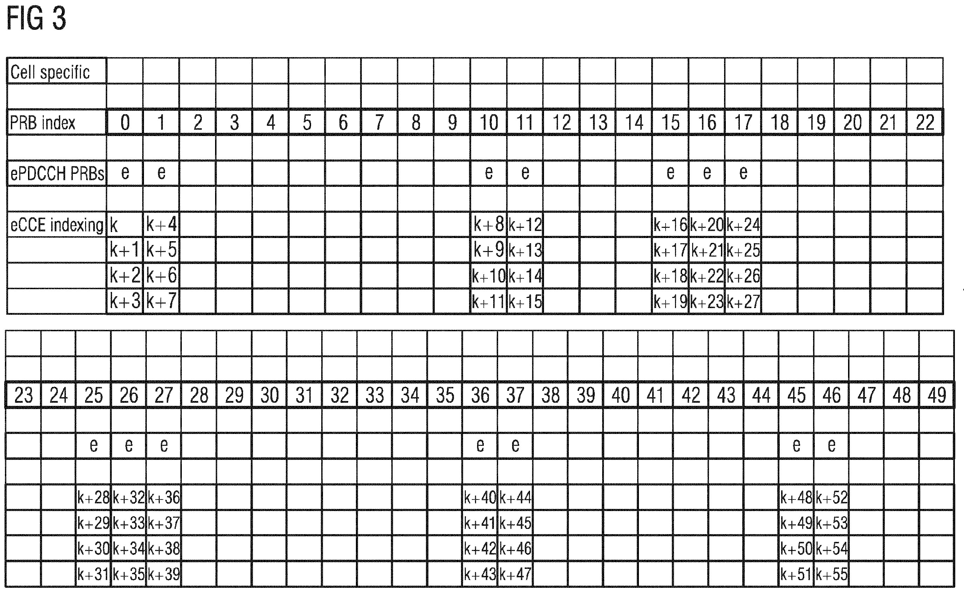

Fig. 3 illustrates a principle of cell specific eCCE indexing. All ePDCCH-capable UEs in the cell know the possible eCCE allocations of all UEs in the cell.

The characteristics of the indexing are as follows:
First, the eNodeB signals to all (ePDCCH capable) UEs in the cell information regarding which PRBs may carry an ePDCCH of at least some of the UEs. Such signaling may be done in different ways. Some examples of possible signaling is described in the following, which is however not intended to limit the invention thereto.

For example, the signaling may be included into the system information and broadcasted to all UEs in the cell using e.g. PBCH, (i.e. included into the MIB), ePBCH (enhanced PBCH) or some SIB.

Further, the signaling may comprise a bitmap indicating the possible ePDCCH PRBs.

Alternatively, the signaling may include e.g. the index of the first ePDCCH PRB or group of PRBs and the relative offset to the next ePDCCH PRB or group of PRBs
Moreover, the signaling may be based also on principle of existing resource allocation signaling schemes defined for PDSCH/ePDCCH and signaled using DCI (e.g. distributed allocation).

Then, the UE determines the number N of eCCEs per allocated PRB according to a pre-defined rule and/or signaling available.

For example, this number can be defined by the standard (e.g. set to be four). This has been assumed in Figure 3 for example.

Alternatively, the number of eCCEs/PRB can be derived from the other known parameters e.g. subframe type (DwPTS, DL subframe, DL subframe with a certain reference signal allocation, DL subframe with certain value for PCFICH).

Moreover, the number may be configured explicitly. The number of eCCE / PRB may also be different for localized and distributed allocations. Presumably, with distributed allocation, there will be a larger number of eCCE on a PRB.

Based on the signaled possible ePDCCH PRB indices, the number N of eCCEs per allocated PRB and some predetermined principles, the UE knows how to index the eCCE space in the cell.

The indexing is continuous and the indexing starts from the eCCEs on the PRB with lowest or highest PRB index. The indexing of eCCEs on different PRBs may be done in different ways, e.g. eCCE-first (as shown in Fig. 3), or PRB-first.

Additionally, the eNodeB may also signal to the UEs an offset parameter, which indicates the index of first ePDCCH eCCE. Such an offset is denoted as "k" in Fig. 3. This parameter allows for controlling the overlap between PUCCH resources allocated implicitly via ePDCCH and PDCCH. The parameter "k" may be either UE or cell specific.

The ePDCCH eCCE index is mapped to PUCCH Format 1a/1b resource index $n^{(1)}_{PUCCH}$.

Such mapping can be one-to-one from e.g. lowest eCCE index of the given ePDCCH to PUCCH resource index as in legacy PDCCH CCE-to-PUCCH mapping case. Final PUCCH resource is obtained based on PUCCH resource index as well as on broadcasted PUCCH parameters.

Alternatively, eCCE index - to - PUCCH index mapping can be many-to-one mapping. This provides further compression on used PUCCH resources. This is beneficial, as there is no need to have a dedicated PUCCH resource for each eCCE: some eCCEs are consumed for UL grants, some UL or DL grants consume multiple eCCEs and some of the HARQ feedback is multiplexed with simultaneous PUSCH transmission.

A crucial aspect on many-to-one mapping is a mechanism for collision avoidance. One known mechanism is to include to the grant a specific field modifying the implicit PUCCH resource allocation. Another option is to avoid collisions via ePDCCH scheduling, that is, the eNB selects eCCEs used for ePDCCHs so that PUCCH resource collisions between UEs are avoided. It is to be noted here that these options can be either used separately or even jointly.

One example of many-to-one mapping supporting the latter option is described below.

The mapping is based on the following observation: The eNB can have CSI of DL channel when ePDCCH is used. The eNB can utilize a limited form of FDPS when selecting PRBs for ePDCCH transmission. Hence, eCCEs mapping to certain PRBs can be preferred for ePDCCH transmission, but there is no difference in signal quality, or preference, between the eCCEs on the same PRB.

In preferred mapping, firstly, eCCEs on the same PRB (such a set of eCCEs is referred to as eCCE group) map to different PUCCH indexes, i.e., one-to-one mapping is used within eCCE group. Secondly, eCCE-to-PUCCH mapping has at most one joint (or shared) PUCCH resource between any two eCCE groups.

Compression is controlled with a broadcasted or RRC signalled parameter β defining how many eCCE indexes map to the same PUCCH index.

With such mapping, eNB can avoid (most) of collisions simply by changing the eCCEs used for the given ePDCCH without need to change PRB allocated for the given ePDCCH.

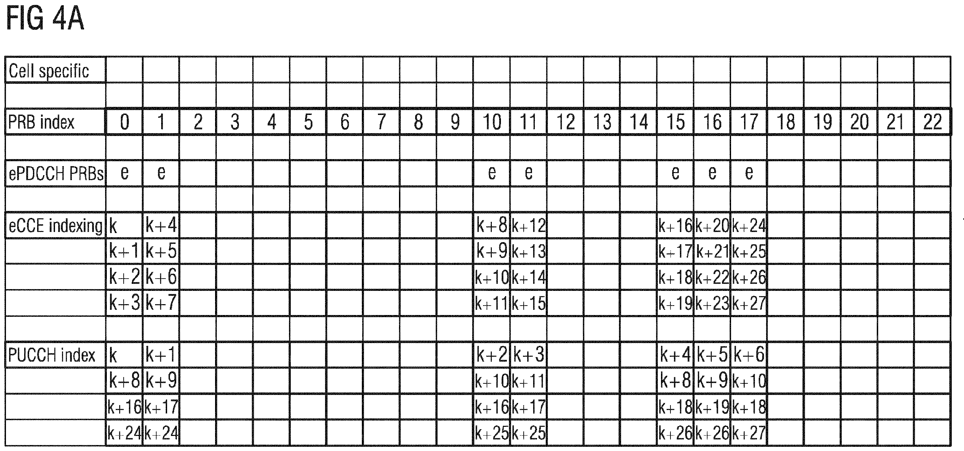

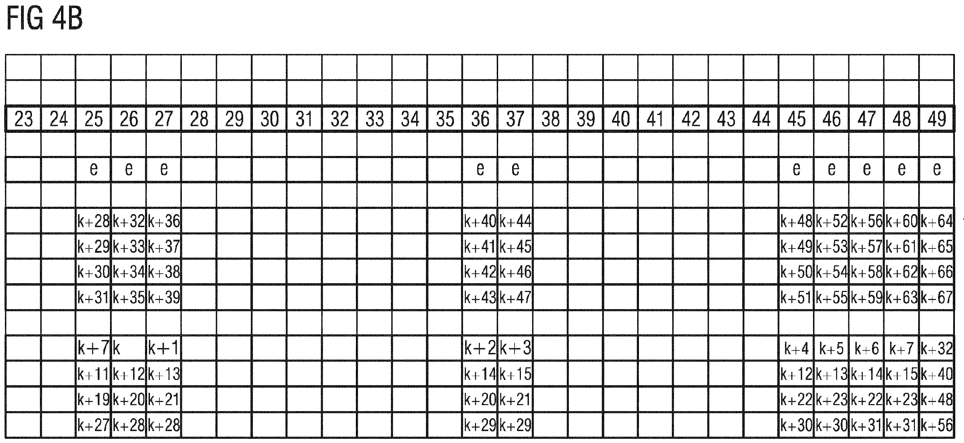

One exemplary mapping from eCCE index i to PUCCH index is given below, and illustrated in Figure 4:

$$n^{(1)}_{PUCCH} = \left(b \bmod \beta^{N-1-a}\right) + \beta^{N-1-a}\left\lfloor \frac{b}{\beta^{N-a}} \right\rfloor + \beta^{N-1}\left[a + (N-1)\left\lfloor \frac{b}{\beta^N} \right\rfloor\right] \quad ,$$

where $a = i \bmod N$ and $b = \left\lfloor \frac{i}{N} \right\rfloor$ and $\lfloor . \rfloor$ defines the largest integer smaller than or equal to the argument.

Fig. 4 illustrates an example on many-to-one mapping between eCCE index and PUCCH index according to the first embodiment for β = 2, N = 4 and the common offset k for both indexes.

Second embodiment

Another possible implementation is UE specific eCCE indexing. In the following, UE specific eCCE indexing according to a second embodiment of the present invention will be described.

In the second embodiment, the basic principle is the same as described above in the first embodiment, but the signaling of the ePDCCH eCCEs is done on a UE specific level.

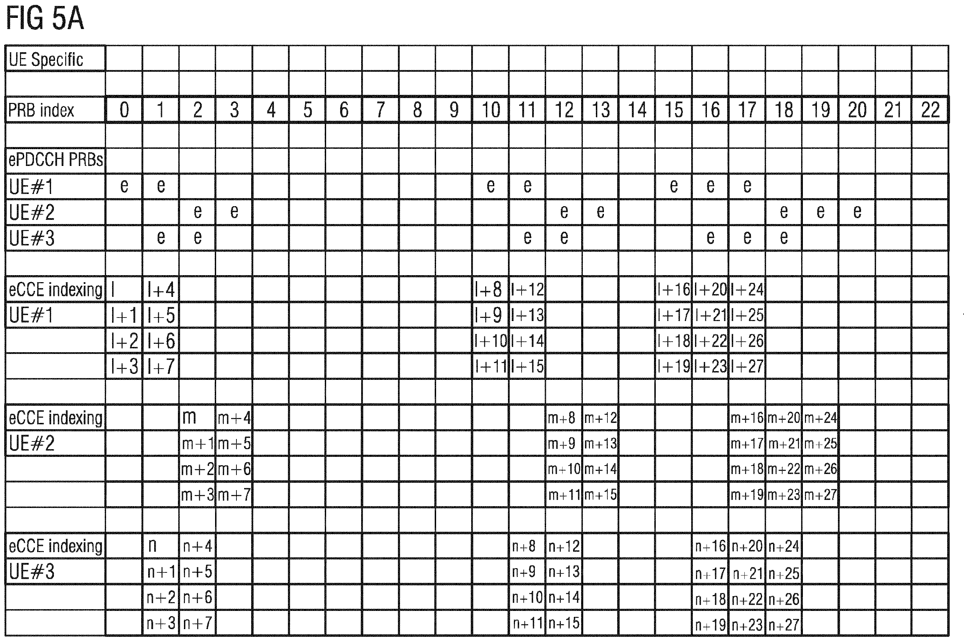

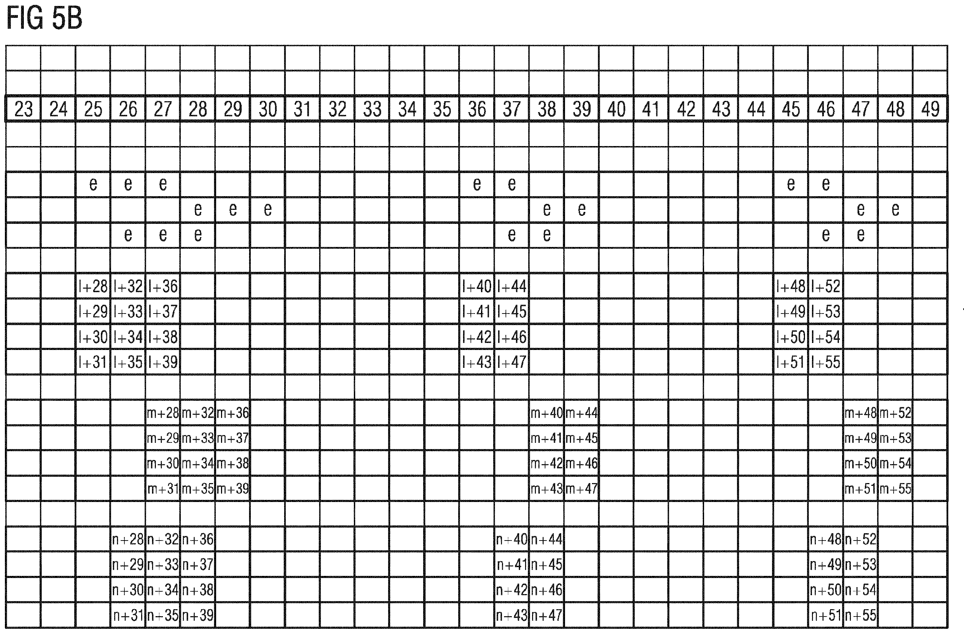

Fig. 5 illustrates a principle of UE specific eCCE indexing.

The main steps according to the second embodiment can be summarized as follows:

The eNodeB signals to ePDCCH capable UEs the information regarding which PRBs may carry an ePDCCH for the UE of interest. Such signaling can be done in various ways. For example, the signaling may be done e.g. via higher layers, such as RRC.

Further, the signaling may comprise a bitmap indicating the possible ePDCCH PRBs.

Alternatively, the signaling may include e.g. the index of the first ePDCCH PRB or group of PRBs and the relative offset to the next ePDCCH PRB or group of PRBs.

Moreover, the signaling may be based also on principle of existing resource allocation signaling schemes defined for PDSCH/ePDCCH (e.g. distributed allocation).

Then, the UE determines the number N of eCCEs per allocated PRB according to a pre-defined rule and/or signaling available, as already mentioned above in the first embodiment.

For example, this number can be defined by the standard e.g. set to be four, which has been assumed in Fig. 5.

Alternatively, the number of eCCEs/PRB can be derived from the other known parameters e.g. subframe type (DwPTS, DL subframe, DL subframe with a certain reference signal allocation, DL subframe with certain value for PCFICH). The number may be configured explicitly. The number of eCCE / PRB may also be different for localized and distributed allocations. Presumably, with distributed allocation there will be larger number of eCCE on a PRB.

Based on the signaled possible ePDCCH PRB indices, the number N of eCCEs per allocated PRB and some predetermined principles, the UE knows how to index its own eCCEs.

For example, the indexing is continuous, and the indexing starts from the eCCEs on the PRB with lowest or highest PRB index. The indexing of eCCEs on different PRBs may be done in different ways, e.g. eCCE-first (as shown in Figure 5), or PRB-first.

Additionally, the eNodeB may also signal to the UEs a UE specific offset parameter, which indicates the index of the first ePDCCH eCCE.

In Fig. 5, these offset parameters are denoted as l, n, and m for UE#1, UE#2, UE#3, respectively.

This parameter allows for controlling the overlap between PUCCH resources allocated implicitly via ePDCCH and PDCCH.

According to an aspect of the second embodiment, the eNB parameterizes eCCE for different UEs such that the eCCE-PRB indexes are aligned among different UEs. This will simplify the PUCCH resource allocation. UE specific offset also provides for efficient PUCCH resource compression, as multiple UEs can be mapped on fully or partially overlapping eCCE indexes.

The ePDCCH eCCE index is mapped to PUCCH resource index. Same mapping methods as described above in the first embodiment can be applied in the second embodiment. However, in the second embodiment, one-to-one mapping may be preferred although many-to-one mapping is also applicable.

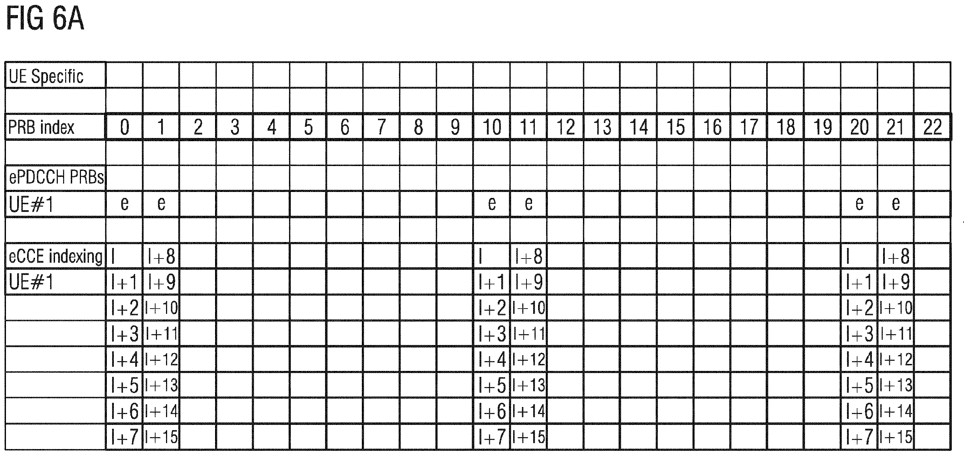

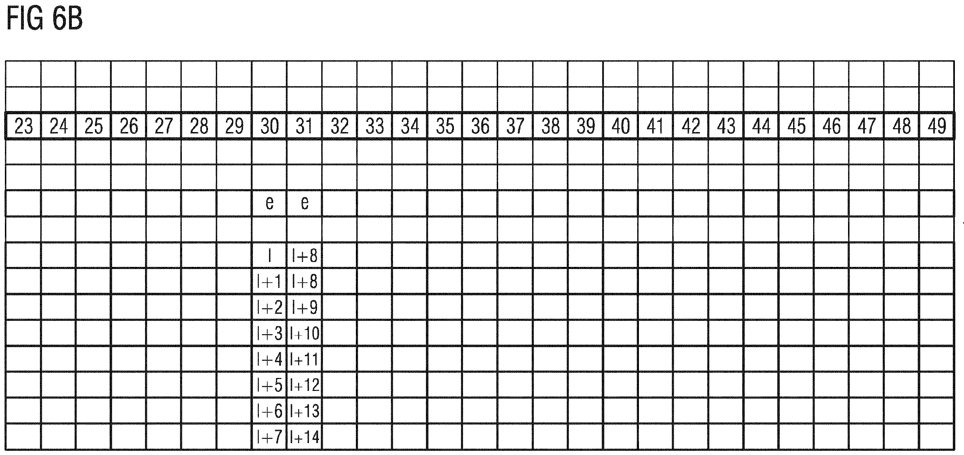

It is noted that the same eCCE indexing principle is applicable with both localized as well as distributed ePDCCH although with distributed ePDCCH a single eCCE may potentially span multiple PRBs, as shown in Fig. 6. Here, the distributed transmission takes place over 4 PRBs, located 10 PRBs apart from each other.

Fig. 6 is a diagram illustrating an example of the indexing in the case of distributed ePDCCH.

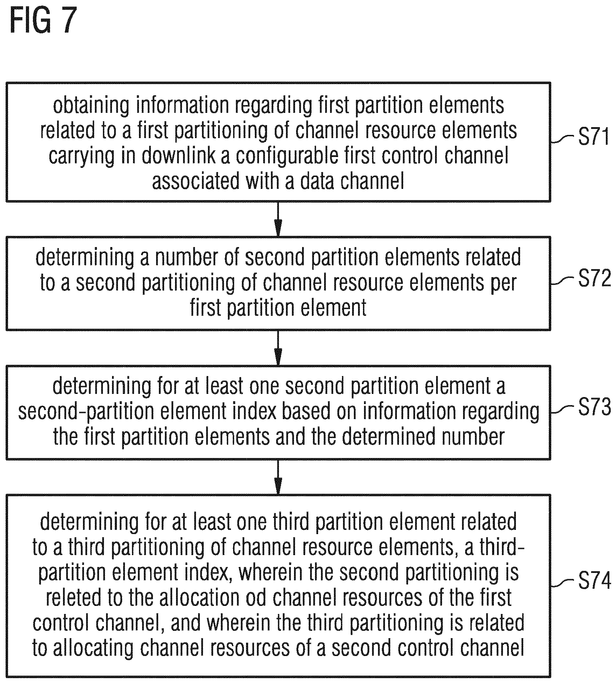

In the following, a general example of implementing the present invention is described with reference to Fig. 7 which is applicable to both of the first and the second embodiment described above.

Fig. 7 is a flowchart illustrating processing of the apparatus according to certain embodiments of the present invention. In the present example, the steps as shown in Fig. 7 are executed by a user equipment as well as by a base station, like an eNodeB in a network.

According to the general example of the present invention, first, in a step S71, the apparatus, i.e. the user equipment or the base station, obtains information regarding first partition elements related to a first partitioning of channel resource elements carrying in downlink a configurable first control channel associated with a data channel, and then, in a step S72, determining a number of second partition elements related to a second partitioning of channel resource elements per first partition element. Then, in a step S73, the apparatus determines for at least one second partition element a second-partition element index based on information regarding the first partition elements and the determined number, and determines, in a step S74, for at least one third partition element related to a third partitioning of channel resource elements, a third-partition element index, wherein the second partitioning is related to the allocation of channel resources of the first control channel, and wherein the third partitioning is related to allocating channel resources of a second control channel.

Further, the apparatus may receive a data packet transmitted on the data channel, and provide feedback information in uplink direction on the second control channel about successful or unsuccessful reception of the data packet.

The first partitioning may be related to allocating channel resources of the data channel.

At least one of the second-partition element index and information regarding first partition elements may be unique in a cell.

At least one of the second-partition element index and information regarding first partition elements may be unique per user equipment.

Each second-partition element index may be mapped to one or more third-partition element indexes.

Further, the apparatus may determine the number of second-partition elements comprises deriving the number from a subframe type.

The second-partition element indices may be determined so as to form a continuous set of indices.

The second-partition element indices may be determined starting from the second-partition element on the first partition element with the lowest index.

The second-partition element indices may be determined starting from the second-partition element on the first partition element with the highest index.

The apparatus further may determine at least one third-partition element index comprises one-to-one mapping between the second-partition element index and the third-partition element index starting from the lowest second-partition element index.

Determining at least one third-partition element index may comprise many-to-one mapping between the second-partition element index and the third-partition element index.

Further, there may be provided a collision avoidance mechanism.

The collision avoidance mechanism may comprise including a specific field modifying the implicit uplink channel resource allocation.

The collision avoidance mechanism may comprise first control channel scheduling including selecting at least one second-partition element used for the first control channel.

Further, the many-to-one mapping may comprise one-to-one mapping between the second-partition element index and the third-partition element index for the second-partition elements contained on one first-partition element.

When the method is executed by a user equipment, obtaining information regarding first partition elements may include receiving the information from a base station.

The user equipment may receive an offset parameter indicating the first second-partition element index from a base station.

Further, the information may be included in system information and received via broadcast. The information may be received via a broadcast channel or enhanced broadcast channel. The information may included in a master information block or system information block. The information may received via dedicated higher layer radio resource control signaling.

Further, the method may executed by a base station and may comprise defining an offset parameter indicating the first second-partition element index from a base station and transmitting the offset parameter to a user equipment.

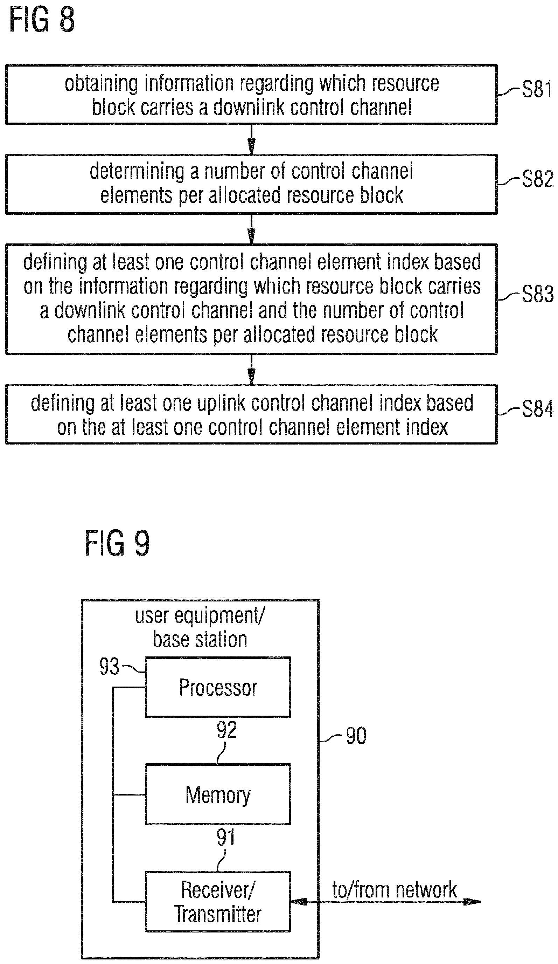

In the following, a specific example of implementing the present invention in a LTE network is described with reference to Fig. 8, which is applicable to both of the first and the second embodiment described above.

Fig. 8 is a flowchart illustrating specific processing of the apparatus in a LTE network according to certain embodiments of the present invention. In the present example, the steps as shown in Fig. 8 are executed by a user equipment as well as by a base station, like an eNodeB in a LTE network. However, it is noted that the specific example is merely presented for explanatory purposes and that the present invention is not limited to this specific example.

According to the specific example of the present invention, first, in a step S81, the apparatus, i.e. the user equipment or the base station, obtains information regarding which resource blocks may carry a downlink control channel. Then, in a step S72, the apparatus determines a number of control channel elements per allocated resource block, and then, in a step S73, determines at least one control channel element index based on the information regarding which resource block carries a downlink control channel and the number of control channel elements per allocated resource block. Further, in a step S74, the apparatus determines at least one uplink control channel index based on the at least one control channel element index.

Fig. 9 is a block diagram showing an example of an apparatus according to certain embodiments of the present invention.

As shown in Fig. 9, according to an embodiment of the present invention, the apparatus 90, i.e. the user equipment or the base station, comprises a receiver/transmitter 91, a memory 92 and a processor 93. The receiver/transmitter 91 configured to communicate with at least another apparatus in the network and to transmit and receive signals, the memory 92 is configured to store computer program code, and the processor 93 is configured to cause the apparatus to perform obtaining information regarding first partition elements related to a first partitioning of channel resource elements carrying in downlink a configurable first control channel associated with a data channel, determining a number of second partition elements related to a second partitioning of channel resource elements per first partition element, determining for at least one second partition element a second-partition element index based on information regarding the first partition elements and the determined number, determining for at least one third partition element related to a third partitioning of channel resource elements, a third-partition element index, wherein the second partitioning is related to the allocation of channel resources of the first control channel, and wherein the third partitioning is related to allocating channel resources of a second control channel.

As already indicated, the above described two signaling schemes according the first embodiment and the second embodiment are not mutually exclusive, but may also coexist in a given cell / TP. That is, the first embodiment and the second embodiment or some aspects of the first embodiment and some aspects of the second embodiment can be combined.

According to such a possible combination, for example, the eCCEs belonging to the common search space and/or the eCCE having distributed resource allocation are assigned in the cell-specific manner, and the eCCEs belonging to the UE specific search space and/or having localized resource allocation are assigned in the UE-specific manner. Of course, also other combinations are possible.

The above described indexing scheme according to certain embodiments of the present invention is an efficient and simple solution from both UL and DL signalling point of view.

The presented many-to-one mapping supports efficient ePDCCH scheduling based collision avoidance without degrading ePDCCH performance.

The UE-specific approach according to the first embodiment supports dynamic operation wherein the PUCCH resource space reserved for HARQ-ACK transmitted on PUCCH as response to received PDSCH can be scaled up and down relatively fast. Thus, the UE-specific approach provides fast dynamic adaptation of the PUCCH resource space.

In the foregoing exemplary description of the apparatus, i.e. the user equipment or the base station, only the units that are relevant for understanding the principles of the invention have been described using functional blocks. The apparatus may comprise further units that are necessary for its respective operation. However, a description of these units is omitted in this specification. The arrangement of the functional blocks of the apparatus is not construed to limit the invention, and the functions may be performed by one block or further split into sub-blocks.

When in the foregoing description it is stated that the apparatus, i.e. the user equipment or the base station (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

For the purpose of the present invention as described herein above, it should be noted that

- method steps likely to be implemented as software code portions and being run using a processor at an apparatus (as examples of devices, apparatuses and/or modules thereof, or as examples of entities including apparatuses and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is noted that the embodiments and general and specific examples described above are provided for illustrative purposes only and are in no way intended that the present invention is restricted thereto. Rather, it is the intention that all variations and modifications which fall within the scope of the appended claims are covered.

Abbreviations:

| | |
|---|---|
| 3GPP | 3rd Generation Partnership Project |
| A/N, ACK/NACK | Acknowledgement/Negative Acknowledgement |
| ARI | ACK/NACK resource index |
| CCE | Control Channel Element |
| CDM | Code Division Multiplexing |
| CoMP | Coordinated Multipoint |
| CSI | Channel State Information |
| DL | Downlink |
| DwPTS | Downlink Pilot Time Slot |
| eCCE | enhanced Control Channel Element |
| eNB | LTE Base Station, evolved Node B |
| ePDCCH | enhanced PDCCH |
| FDPS | Frequency Domain Packet Scheduling |
| HARQ | Hybrid Automatic Repeat Request |
| LTE | Long Term Evolution |

| MIB | Master Information Block |
|---|---|
| PCFICH | Physical Control Format Indicator Channel |
| PDCCH | Physical Downlink Control Channel |
| PDSCH | Physical Downlink Shared Channel |
| PRB | Physical Resource Block |
| PUCCH | Physical Uplink Control Channel |
| RRC | Radio Resource Control |
| SIB | System Information Block |
| UE | User Equipment |
| UL | Uplink |
| TP | Transmission Point |

**Claims**

1. A method performed by a user equipment, the method comprising:

   receiving (S71), from a base station, information regarding first physical resource blocks, related to a first partitioning of channel resource elements, that can carry, in downlink, a configurable enhanced physical downlink control channel for allocating resources to a data channel;
   determining (S72) a number of enhanced control channel elements, related to a second partitioning of channel resource elements, to be used per physical resource block of the first physical resource blocks;
   determining (S73), for at least one first enhanced control channel element, an enhanced control channel element index based on: i) the information regarding the first physical resource blocks, and ii) the determined number of enhanced control channel elements to be used per physical resource block; and
   determining (S74), for at least one physical uplink control channel resource, related to a third partitioning of channel resource elements, a physical uplink control channel index based on the determined enhanced control channel element index and according to the information regarding the first physical resource blocks,
   wherein the first partitioning is related to a partitioning used for allocating channel resources to the data channel,
   wherein the second partitioning is related to the allocation of channel resources of the enhanced physical downlink control channel, and
   wherein the third partitioning is related to allocating channel resources of a physical uplink control channel.

2. The method according to claim 1, further comprising receiving a data packet transmitted on the data channel, and providing feedback information in uplink direction on the physical uplink control channel about successful or unsuccessful reception of the data packet.

3. The method according to any one of claims 1 to 2, wherein at least one of: the enhanced control channel element index, and the information regarding first physical resource blocks, is unique: in a cell, or per user equipment.

4. The method according to any one of claims 1 to 3, wherein each enhanced control channel element index is mapped to one or more physical uplink control channel indexes.

5. The method according to any one of claims 1 to 4, wherein determining the number of enhanced control channel elements comprises deriving the number from a subframe type.

6. The method according to any one of claims 1 to 5, wherein the enhanced control channel element indices are determined so as to form a continuous set of indices.

7. The method according to any one of claims 1 to 6, wherein the enhanced control channel element indices are determined starting from the enhanced control channel element on the first physical resource block with the lowest index.

8. The method according to any one of claims 1 to 6, wherein the enhanced control channel element indices are determined starting from the enhanced control channel element on the first physical resource block with the highest index.

9. The method according to any one of claims 1 to 8, wherein determining at least one physical uplink control channel index comprises one-to-one mapping between the enhanced control channel element index and the physical uplink control channel index starting from the lowest enhanced control channel element index.

10. The method according to any one of claims 1 to 8, wherein determining at least one physical uplink control channel index comprises many-to-one mapping between the enhanced control channel element index and the physical uplink control channel index.

11. The method according to claim 10, further comprising a collision avoidance mechanism.

12. The method according to claim 11, wherein the collision avoidance mechanism comprises including a specific field modifying the implicit uplink channel resource allocation.

13. The method according to claim 11, wherein the collision avoidance mechanism comprises enhanced physical downlink control channel scheduling including selecting at least one enhanced control channel element used for the enhanced physical downlink control channel.

14. The method according to claim 10, wherein the many-to-one mapping comprises one-to-one mapping between the enhanced control channel element index and the third partition element index for the enhanced control channel elements contained on the same one first physical resource block.

15. The method according to any of claims 1 to 14, further comprising receiving an offset parameter indicating the enhanced control channel element index and the physical uplink control channel index from the base station.

16. An apparatus configured to be operable in a user equipment, the apparatus comprising:

a receiver/transmitter configured to communicate with at least another apparatus configured to be operable in a base station;
a memory configured to store computer program code; and
a processor configured to cause the apparatus to perform:

receiving (S71), from the base station, information regarding first physical resource blocks, related to a first partitioning of channel resource elements, that can carry, in downlink, a configurable enhanced physical downlink control channel for allocating channel resources to a data channel,
determining (S72) a number of enhanced control channel elements, related to a second partitioning of channel resource elements, to be used per physical resource block of the first physical resource blocks,
determining (S73), for at least one enhanced control channel element, an enhanced control channel element index based on: i) the information regarding the first physical resource blocks, and ii) the determined number of enhanced control channel elements,
determining (S74), for at least one physical uplink control channel resource, related to a third partitioning of channel resource elements, a physical uplink control channel index based on the determined enhanced control channel element index and according to the information regarding the first physical resource blocks,
wherein the first partitioning is related to a partitioning used for allocating channel resources to the data channel,
wherein the second partitioning is related to the allocation of channel resources of the enhanced physical downlink control channel, and
wherein the third partitioning is related to allocating channel resources of a physical uplink control channel.

17. A computer program product including a program for a processing device, comprising instructions which, when the program is executed by the processing device, cause the processing device to carry out the method of any of claims 1 to 15.

**Patentansprüche**

1. Verfahren, das von einer Teilnehmereinrichtung durchgeführt wird, wobei das Verfahren Folgendes umfasst:

Empfangen (S71) von Informationen über erste physische Ressourcenblöcke, die sich auf eine erste Partitionierung von Kanalressourcenelementen beziehen, die in Downlink zum Zuteilen von Ressourcen zu einem Datenkanal einen auslegbaren erweiterten physischen Downlinksteuerkanal transportieren können, von einer Basisstation;

Bestimmen (S72) einer Anzahl von erweiterten Steuerkanalelementen, die sich auf eine zweite Partitionierung von Kanalressourcenelementen beziehen, die pro physischem Ressourcenblock der ersten physischen Ressourcenblöcke zu verwenden sind;

Bestimmen (S73) eines erweiterten Steuerkanalelementindex für mindestens ein erstes erweitertes Steuerkanalelement auf Basis von: i) den Informationen über die ersten physischen Ressourcenblöcke und ii) der bestimmten Anzahl von erweiterten Steuerkanalelementen, die pro physischem Ressourcenblock zu verwenden sind; und

Bestimmen (S74) eines physischen Uplinksteuerkanalindex für mindestens eine physische Uplinksteuerkanalressource, die sich auf eine dritte Partitionierung von Kanalressourcenelementen beziehen, auf Basis des bestimmten erweiterten Steuerkanalelementindex und gemäß den Informationen über die ersten physischen Ressourcenblöcke,

wobei sich die erste Partitionierung auf eine Partitionierung bezieht, die zum Zuteilen von Kanalressourcen zum Datenkanal verwendet wird,

wobei sich die zweite Partitionierung auf die Zuteilung von Kanalressourcen des erweiterten physischen Downlinksteuerkanals bezieht, und

wobei sich die dritte Partitionierung auf ein Zuteilen von Kanalressourcen des physischen Uplinksteuerkanals bezieht.

2. Verfahren nach Anspruch 1, das ferner das Empfangen eines auf dem Datenkanal übertragenen Datenpakets umfasst, und
Bereitstellen von Feedbackinformationen in einer Uplinkrichtung auf dem physischen Uplinksteuerkanal über einen erfolgreichen oder erfolglosen Empfang des Datenpakets.

3. Verfahren nach einem der Ansprüche 1 bis 2, wobei mindestens eines des erweiterten Steuerkanalelementindex und der Informationen über die ersten physischen Ressourcenblöcke in einer Zelle oder pro Teilnehmereinrichtung eindeutig ist.

4. Verfahren nach einem der Ansprüche 1 bis 3, wobei jeder erweiterte Steuerkanalelementindex einem oder mehreren physischen Uplinksteuerkanalindices zugeordnet wird.

5. Verfahren nach einem der Ansprüche 1 bis 4, wobei das Bestimmen der Anzahl von erweiterten Steuerkanalelementen das Ableiten der Anzahl von einem Unterframetyp umfasst.

6. Verfahren nach einem der Ansprüche 1 bis 5, wobei die erweiterten Steuerkanalelementindices bestimmt werden, um einen durchgehenden Satz von Indices zu bilden.

7. Verfahren nach einem der Ansprüche 1 bis 6, wobei die erweiterten Steuerkanalelementindices beginnend beim erweiterten Steuerkanalelement im ersten physischen Ressourcenblock mit dem niedrigsten Index bestimmt werden.

8. Verfahren nach einem der Ansprüche 1 bis 6, wobei die erweiterten Steuerkanalelementindices beginnend beim erweiterten Steuerkanalelement im ersten physischen Ressourcenblock mit dem höchsten Index bestimmt werden.

9. Verfahren nach einem der Ansprüche 1 bis 8, wobei das Bestimmen von mindestens einem physischen Uplinksteuerkanalindex eine Eins-zu-eins-Zuordnung zwischen dem erweiterten Steuerkanalelementindex und dem physischen Uplinksteuerkanalindex beginnend beim niedrigsten erweiterten Steuerkanalelementindex umfasst.

10. Verfahren nach einem der Ansprüche 1 bis 8, wobei das Bestimmen von mindestens einem physischen Uplinksteuerkanalindex eine Viele-zu-eins-Zuordnung zwischen dem erweiterten Steuerkanalelementindex und dem physischen Uplinksteuerkanalindex umfasst.

11. Verfahren nach Anspruch 10, das ferner einen Kollisionsvermeidungsmechanismus umfasst.

12. Verfahren nach Anspruch 11, wobei der Kollisionsvermeidungsmechanismus das Einbinden eines spezifischen Feldes umfasst, das die implizite Zuteilung von Uplinkkanalressourcen modifiziert.

13. Verfahren nach Anspruch 11, wobei der Kollisionsvermeidungsmechanismus das Planen von erweiterten physischen Downlinksteuerkanälen umfasst, was das Auswählen von mindestens einem erweiterten Steuerkanalelement beinhaltet, das für den erweiterten physischen Downlinksteuerkanal verwendet wird.

14. Verfahren nach Anspruch 10, wobei die Viele-zu-eins-Zuordnung eine Eins-zu-eins-Zuordnung zwischen dem erweiterten Steuerkanalelementindex und dem dritten Partitionselementindex für die erweiterten Steuerkanalelemente umfasst, die im selben ersten physischen Ressourcenblock enthalten sind.

15. Verfahren nach einem der Ansprüche 1 bis 14, das ferner das Empfangen eines Versatzparameters umfasst, der den erweiterten Steuerkanalelementindex und den physischen Uplinksteuerkanalindex von der Basisstation anzeigt.

16. Einrichtung, die dazu ausgelegt ist, in einer Teilnehmereinrichtung betreibbar zu sein, wobei die Einrichtung Folgendes umfasst:

einen Empfänger/Sender, der dazu ausgelegt ist, mit mindestens einer weiteren Einrichtung zu kommunizieren, die dazu ausgelegt ist, in einer Basisstation betreibbar zu sein;
einen Speicher, der dazu ausgelegt ist, einen Computerprogrammcode zu speichern; und
einen Prozessor, der dazu ausgelegt ist, die Einrichtung zu veranlassen, Folgendes durchzuführen:

Empfangen (S71) von Informationen über erste physische Ressourcenblöcke, die sich auf eine erste Partitionierung von Kanalressourcenelementen beziehen, die in Downlink zum Zuteilen von Kanalressourcen zu einem Datenkanal einen auslegbaren erweiterten physischen Downlinksteuerkanal transportieren können, von der Basisstation,
Bestimmen (S72) einer Anzahl von erweiterten Steuerkanalelementen, die sich auf eine zweite Partitionierung von Kanalressourcenelementen beziehen, die pro physischem Ressourcenblock der ersten physischen Ressourcenblöcke zu verwenden sind,
Bestimmen (S73) eines erweiterten Steuerkanalelementindex für mindestens ein erweitertes Steuerkanalelement auf Basis von: i) den Informationen über die ersten physischen Ressourcenblöcke und ii) der bestimmten Anzahl von erweiterten Steuerkanalelementen,
Bestimmen (S74) eines physischen Uplinksteuerkanalindex für mindestens eine physische Uplinksteuerkanalressource, die sich auf eine dritte Partitionierung von Kanalressourcenelementen beziehen, auf Basis des bestimmten erweiterten Steuerkanalelementindex und gemäß den Informationen über die ersten physischen Ressourcenblöcke,
wobei sich die erste Partitionierung auf eine Partitionierung bezieht, die zum Zuteilen von Kanalressourcen zum Datenkanal verwendet wird,
wobei sich die zweite Partitionierung auf die Zuteilung von Kanalressourcen des erweiterten physischen Downlinksteuerkanals bezieht, und
wobei sich die dritte Partitionierung auf ein Zuteilen von Kanalressourcen des physischen Uplinksteuerkanals bezieht.

17. Computerprogrammprodukt, das ein Programm für eine Verarbeitungsvorrichtung beinhaltet, das Anweisungen umfasst, die, wenn das Programm von der Verarbeitungsvorrichtung ausgeführt wird, die Verarbeitungsvorrichtung veranlassen, das Verfahren von einem der Ansprüche 1 bis 15 umzusetzen.

**Revendications**

1. Procédé effectué par un équipement utilisateur, le procédé comprenant :

la réception (S71), d'une station de base, d'informations concernant des premiers blocs de ressources physiques liés à un premier partitionnement d'éléments de ressources de canal, qui peuvent transporter en liaison descendante un canal physique de contrôle de liaison descendante amélioré configurable pour l'allocation de ressources à un canal de données ;
la détermination (S72) d'un nombre d'éléments de canal de contrôle améliorés liés à un deuxième partitionnement d'éléments de ressources de canal, à utiliser par bloc de ressources physiques des premiers blocs de ressources physiques ;
la détermination (S73), pour au moins un premier élément de canal de contrôle amélioré, d'un indice d'élément de canal de contrôle amélioré sur la base : i) des informations concernant les premiers blocs de ressources physiques, et ii) du nombre déterminé d'éléments de canal de contrôle améliorés à utiliser par bloc de ressources physiques ; et

la détermination (S74), pour au moins une ressource de canal physique de contrôle de liaison montante liée à un troisième partitionnement d'éléments de ressources de canal, d'un indice de canal physique de contrôle de liaison montante sur la base de l'indice d'élément de canal de contrôle amélioré déterminé et selon les informations concernant les premiers blocs de ressources physiques,

dans lequel le premier partitionnement est lié à un partitionnement utilisé pour allouer des ressources de canal au canal de données,

dans lequel le deuxième partitionnement est lié à l'allocation de ressources de canal du canal physique de contrôle de liaison descendante amélioré, et

dans lequel le troisième partitionnement est lié à l'allocation de ressources de canal d'un canal physique de contrôle de liaison montante.

2. Procédé selon la revendication 1, comprenant en outre la réception d'un paquet de données transmis sur le canal de données, et

la fourniture d'informations de rétraction dans une direction de liaison montante sur le canal physique de contrôle de liaison montante concernant la réussite ou l'échec de la réception du paquet de données.

3. Procédé selon l'une des revendications 1 et 2, dans lequel au moins l'un des éléments suivants est unique, dans une cellule ou par équipement utilisateur : l'indice d'élément de canal de contrôle amélioré, et les informations concernant des premiers blocs de ressources physiques.

4. Procédé selon l'une des revendications 1 à 3, dans lequel chaque indice d'élément de canal de contrôle amélioré est mappé à un ou plusieurs indices de canal physique de contrôle de liaison montante.

5. Procédé selon l'une des revendications 1 à 4, dans lequel la détermination du nombre d'éléments de canal de contrôle améliorés consiste à dériver le nombre à partir d'un type de sous-trame.

6. Procédé selon l'une des revendications 1 à 5, dans lequel les indices d'élément de canal de contrôle amélioré sont déterminés de manière à former un ensemble continu d'indices.

7. Procédé selon l'une des revendications 1 à 6, dans lequel les indices d'élément de canal de contrôle amélioré sont déterminés en partant de l'élément de canal de contrôle amélioré sur le premier bloc de ressources physiques ayant l'indice le plus bas.

8. Procédé selon l'une des revendications 1 à 6, dans lequel les indices d'élément de canal de contrôle amélioré sont déterminés en partant de l'élément de canal de contrôle amélioré sur le premier bloc de ressources physiques ayant l'indice le plus élevé.

9. Procédé selon l'une des revendications 1 à 8, dans lequel la détermination d'au moins un indice de canal physique de contrôle de liaison montante comprend un mappage un à un entre l'indice d'élément de canal de contrôle amélioré et l'indice de canal physique de contrôle de liaison montante en partant de l'indice d'élément de canal de contrôle amélioré le plus bas.

10. Procédé selon l'une des revendications 1 à 8, dans lequel la détermination d'au moins un indice de canal physique de contrôle de liaison montante comprend un mappage plusieurs à un entre l'indice d'élément de canal de contrôle amélioré et l'indice de canal physique de contrôle de liaison montante.

11. Procédé selon la revendication 10, comprenant en outre un mécanisme d'évitement des collisions.

12. Procédé selon la revendication 11, dans lequel le mécanisme d'évitement des collisions comprend l'inclusion d'un champ spécifique modifiant l'allocation implicite de ressources de canal de liaison montante.

13. Procédé selon la revendication 11, dans lequel le mécanisme d'évitement des collisions comprend l'ordonnancement d'un canal physique de contrôle de liaison descendante amélioré comportant la sélection d'au moins un élément de canal de contrôle amélioré utilisé pour le canal physique de contrôle de liaison descendante amélioré.

14. Procédé selon la revendication 10, dans lequel le mappage plusieurs à un comprend un mappage un à un entre l'indice d'élément de canal de contrôle amélioré et l'indice de troisième élément de partition pour les éléments de canal de contrôle améliorés contenus dans le même premier bloc de ressources physiques.

15. Procédé selon l'une des revendications 1 à 14, comprenant en outre la réception d'un paramètre de décalage indiquant l'indice d'élément de canal de contrôle amélioré et l'indice de canal physique de contrôle de liaison montante de la station de base.

16. Appareil configuré pour pourvoir fonctionner dans un équipement utilisateur, l'appareil comprenant :

un récepteur/émetteur configuré pour communiquer avec au moins un autre appareil configuré pour pourvoir fonctionner dans une station de base ;
une mémoire configurée pour stocker un code de programme informatique ; et
un processeur configuré pour amener l'appareil à effectuer :

la réception (S71), de la station de base, d'informations concernant des premiers blocs de ressources physiques liés à un premier partitionnement d'éléments de ressources de canal, qui peuvent transporter en liaison descendante un canal physique de contrôle de liaison descendante amélioré configurable pour l'allocation de ressources de canal à un canal de données,
la détermination (S72) d'un nombre d'éléments de canal de contrôle améliorés liés à un deuxième partitionnement d'éléments de ressources de canal, à utiliser par bloc de ressources physiques des premiers blocs de ressources physiques,
la détermination (S73), pour au moins un élément de canal de contrôle amélioré, d'un indice d'élément de canal de contrôle amélioré sur la base : i) des informations concernant les premiers blocs de ressources physiques, et ii) du nombre déterminé d'éléments de canal de contrôle améliorés,
la détermination (S74), pour au moins une ressource de canal physique de contrôle de liaison montante liée à un troisième partitionnement d'éléments de ressources de canal, d'un indice de canal physique de contrôle de liaison montante sur la base de l'indice d'élément de canal de contrôle amélioré déterminé et selon les informations concernant les premiers blocs de ressources physiques,
dans lequel le premier partitionnement est lié à un partitionnement utilisé pour allouer des ressources de canal au canal de données,
dans lequel le deuxième partitionnement est lié à l'allocation de ressources de canal du canal physique de contrôle de liaison descendante amélioré, et
dans lequel le troisième partitionnement est lié à l'allocation de ressources de canal d'un canal physique de contrôle de liaison montante.

17. Produit programme informatique comprenant un programme pour un dispositif de traitement, comprenant des instructions qui, lorsque le programme est exécuté par le dispositif de traitement, amènent le dispositif de traitement à mettre en œuvre le procédé de l'une des revendications 1 à 15.

EP 2 693 678 B1

## FIG 1

| | | UE#1 | UE#2 | UE#3 | | | | UE#4 | | UE#5 | |
|---|---|---|---|---|---|---|---|---|---|---|---|
| PDCCH CCE | | 0 | 1 | 2 | 3 | 4 | 5 | 6 | 7 | 8 | 9 |
| | | | | | | | | | | | |
| | | ↓ | ↓ | ↓ | | ↓ | | | | ↓ | |
| PUCCH resource# | | 0 | 1 | 2 | 3 | 4 | 5 | 6 | 7 | 8 | 9 |
| | | | | | | | | | | | |
| | | | | | | unused | | | | | |

# FIG 2

| PRB | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| | | | | | | | | | | | | | | | | | | | | | | | |
| eCCEindexing | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 |
| | 100 | 101 | 102 | 103 | 104 | 105 | 106 | 107 | 108 | 109 | 110 | 111 | 112 | 113 | 114 | 115 | 116 | 117 | 118 | 119 | 120 | 121 | 122 |
| | 150 | 151 | 152 | 153 | 154 | 155 | 156 | 157 | 158 | 159 | 160 | 161 | 162 | 163 | 164 | 165 | 166 | 167 | 168 | 169 | 170 | 171 | 172 |

| 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
|---|---|---|---|---|---|---|---|---|---|---|---|---|---|---|---|---|---|---|---|---|---|---|---|---|---|---|
| | | | | | | | | | | | | | | | | | | | | | | | | | | |
| 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| 73 | 74 | 75 | 76 | 77 | 78 | 79 | 80 | 81 | 82 | 83 | 84 | 85 | 86 | 87 | 88 | 89 | 90 | 91 | 92 | 93 | 94 | 95 | 96 | 97 | 98 | 99 |
| 123 | 124 | 125 | 126 | 127 | 128 | 129 | 130 | 131 | 132 | 133 | 134 | 135 | 136 | 137 | 138 | 139 | 140 | 141 | 142 | 143 | 144 | 145 | 146 | 147 | 148 | 149 |
| 173 | 174 | 175 | 176 | 177 | 178 | 179 | 180 | 181 | 182 | 183 | 184 | 185 | 186 | 187 | 188 | 189 | 190 | 191 | 192 | 193 | 194 | 195 | 196 | 197 | 198 | 199 |

EP 2 693 678 B1

# FIG 3

| Cell specific | | | | | | | | | | | | | | | | | | | | | | | |
|---|---|---|---|---|---|---|---|---|---|---|---|---|---|---|---|---|---|---|---|---|---|---|---|
| PRB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| ePDCCH PRBs | e | e | | | | | | | | | e | e | | | | e | e | e | | | | | |
| eCCE indexing | k | k+4 | | | | | | | | | k+8 | k+12 | | | | k+16 | k+20 | k+24 | | | | | |
| | | k+1 | k+5 | | | | | | | | | k+9 | k+13 | | | | k+17 | k+21 | k+25 | | | | |
| | | k+2 | k+6 | | | | | | | | | k+10 | k+14 | | | | k+18 | k+22 | k+26 | | | | |
| | | k+3 | k+7 | | | | | | | | | k+11 | k+15 | | | | k+19 | k+23 | k+27 | | | | |

| | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
|---|---|---|---|---|---|---|---|---|---|---|---|---|---|---|---|---|---|---|---|---|---|---|---|---|---|---|---|
| | | | e | e | e | | | | | | | | | e | e | | | | | | | | e | e | | | |
| | | | k+28 | k+32 | k+36 | | | | | | | | | k+40 | k+44 | | | | | | | | k+48 | k+52 | | | |
| | | | k+29 | k+33 | k+37 | | | | | | | | | k+41 | k+45 | | | | | | | | k+49 | k+53 | | | |
| | | | k+30 | k+34 | k+38 | | | | | | | | | k+42 | k+46 | | | | | | | | k+50 | k+54 | | | |
| | | | k+31 | k+35 | k+39 | | | | | | | | | k+43 | k+47 | | | | | | | | k+51 | k+55 | | | |

EP 2 693 678 B1

EP 2 693 678 B1

# FIG 4A

| Cell specific | | | | | | | | | | | | | | | | | | | | | | | |
|---|---|---|---|---|---|---|---|---|---|---|---|---|---|---|---|---|---|---|---|---|---|---|---|
| | | | | | | | | | | | | | | | | | | | | | | | |
| PRB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| | | | | | | | | | | | | | | | | | | | | | | | |
| ePDCCH PRBs | e | e | | | | | | | | | e | e | | | | e | e | e | | | | | |
| | | | | | | | | | | | | | | | | | | | | | | | |
| eCCE indexing | k | k+4 | | | | | | | | | k+8 | k+12 | | | | k+16 | k+20 | k+24 | | | | | |
| | k+1 | k+5 | | | | | | | | | k+9 | k+13 | | | | k+17 | k+21 | k+25 | | | | | |
| | k+2 | k+6 | | | | | | | | | k+10 | k+14 | | | | k+18 | k+22 | k+26 | | | | | |
| | k+3 | k+7 | | | | | | | | | k+11 | k+15 | | | | k+19 | k+23 | k+27 | | | | | |
| | | | | | | | | | | | | | | | | | | | | | | | |
| PUCCH index | k | k+1 | | | | | | | | | k+2 | k+3 | | | | k+4 | k+5 | k+6 | | | | | |
| | k+8 | k+9 | | | | | | | | | k+10 | k+11 | | | | k+8 | k+9 | k+10 | | | | | |
| | k+16 | k+17 | | | | | | | | | k+16 | k+17 | | | | k+18 | k+19 | k+18 | | | | | |
| | k+24 | k+24 | | | | | | | | | k+25 | k+25 | | | | k+26 | k+26 | k+27 | | | | | |

FIG 4B

| 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
|---|---|---|---|---|---|---|---|---|---|---|---|---|---|---|---|---|---|---|---|---|---|---|---|---|---|---|
|  |  | e | e | e |  |  |  |  |  |  |  |  | e | e |  |  |  |  |  |  |  | e | e | e | e | e |
|  |  | k+28 | k+32 | k+36 |  |  |  |  |  |  |  |  | k+40 | k+44 |  |  |  |  |  |  |  | k+48 | k+52 | k+56 | k+60 | k+64 |
|  |  | k+29 | k+33 | k+37 |  |  |  |  |  |  |  |  | k+41 | k+45 |  |  |  |  |  |  |  | k+49 | k+53 | k+57 | k+61 | k+65 |
|  |  | k+30 | k+34 | k+38 |  |  |  |  |  |  |  |  | k+42 | k+46 |  |  |  |  |  |  |  | k+50 | k+54 | k+58 | k+62 | k+66 |
|  |  | k+31 | k+35 | k+39 |  |  |  |  |  |  |  |  | k+43 | k+47 |  |  |  |  |  |  |  | k+51 | k+55 | k+59 | k+63 | k+67 |
|  |  |  |  |  |  |  |  |  |  |  |  |  |  |  |  |  |  |  |  |  |  |  |  |  |  |  |
|  |  | k+7 | k | k+1 |  |  |  |  |  |  |  |  | k+2 | k+3 |  |  |  |  |  |  |  | k+4 | k+5 | k+6 | k+7 | k+32 |
|  |  | k+11 | k+12 | k+13 |  |  |  |  |  |  |  |  | k+14 | k+15 |  |  |  |  |  |  |  | k+12 | k+13 | k+14 | k+15 | k+40 |
|  |  | k+19 | k+20 | k+21 |  |  |  |  |  |  |  |  | k+20 | k+21 |  |  |  |  |  |  |  | k+22 | k+23 | k+22 | k+23 | k+48 |
|  |  | k+27 | k+28 | k+28 |  |  |  |  |  |  |  |  | k+29 | k+29 |  |  |  |  |  |  |  | k+30 | k+30 | k+31 | k+31 | k+56 |

EP 2 693 678 B1

# FIG 5A

| UE Specific | | | | | | | | | | | | | | | | | | | | | | | |
|---|---|---|---|---|---|---|---|---|---|---|---|---|---|---|---|---|---|---|---|---|---|---|---|
| | | | | | | | | | | | | | | | | | | | | | | | |
| PRB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| | | | | | | | | | | | | | | | | | | | | | | | |
| ePDCCH PRBs | | | | | | | | | | | | | | | | | | | | | | | |
| UE#1 | e | e | | | | | | | | | e | e | | | | e | e | e | | | | | |
| UE#2 | | | e | e | | | | | | | | | e | e | | | | | e | e | e | | |
| UE#3 | | e | e | | | | | | | | | e | e | | | | e | e | e | | | | |
| | | | | | | | | | | | | | | | | | | | | | | | |
| eCCE indexing | l | l+4 | | | | | | | | | l+8 | l+12 | | | | l+16 | l+20 | l+24 | | | | | |
| UE#1 | l+1 | l+5 | | | | | | | | | l+9 | l+13 | | | | l+17 | l+21 | l+25 | | | | | |
| | l+2 | l+6 | | | | | | | | | l+10 | l+14 | | | | l+18 | l+22 | l+26 | | | | | |
| | l+3 | l+7 | | | | | | | | | l+11 | l+15 | | | | l+19 | l+23 | l+27 | | | | | |
| | | | | | | | | | | | | | | | | | | | | | | | |
| eCCE indexing | | | m | m+4 | | | | | | | | | m+8 | m+12 | | | | m+16 | m+20 | m+24 | | | |
| UE#2 | | | m+1 | m+5 | | | | | | | | | m+9 | m+13 | | | | m+17 | m+21 | m+25 | | | |
| | | | m+2 | m+6 | | | | | | | | | m+10 | m+14 | | | | m+18 | m+22 | m+26 | | | |
| | | | m+3 | m+7 | | | | | | | | | m+11 | m+15 | | | | m+19 | m+23 | m+27 | | | |
| | | | | | | | | | | | | | | | | | | | | | | | |
| eCCE indexing | | n | n+4 | | | | | | | | | n+8 | n+12 | | | | n+16 | n+20 | n+24 | | | | |
| UE#3 | | n+1 | n+5 | | | | | | | | | n+9 | n+13 | | | | n+17 | n+21 | n+25 | | | | |
| | | n+2 | n+6 | | | | | | | | | n+10 | n+14 | | | | n+18 | n+22 | n+26 | | | | |
| | | n+3 | n+7 | | | | | | | | | n+11 | n+15 | | | | n+19 | n+23 | n+27 | | | | |

EP 2 693 678 B1

# FIG 5B

| 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
|---|---|---|---|---|---|---|---|---|---|---|---|---|---|---|---|---|---|---|---|---|---|---|---|---|---|---|
|  |  | e | e | e |  |  |  |  |  |  |  |  | e | e |  |  |  |  |  |  |  | e | e |  |  |  |
|  |  |  |  |  | e | e | e |  |  |  |  |  |  |  | e | e |  |  |  |  |  |  |  |  | e | e |  |
|  |  |  | e | e | e |  |  |  |  |  |  |  |  | e | e |  |  |  |  |  |  |  | e | e |  |  |  |
|  |  | l+28 | l+32 | l+36 |  |  |  |  |  |  |  |  | l+40 | l+44 |  |  |  |  |  |  |  | l+48 | l+52 |  |  |  |
|  |  | l+29 | l+33 | l+37 |  |  |  |  |  |  |  |  | l+41 | l+45 |  |  |  |  |  |  |  | l+49 | l+53 |  |  |  |
|  |  | l+30 | l+34 | l+38 |  |  |  |  |  |  |  |  | l+42 | l+46 |  |  |  |  |  |  |  | l+50 | l+54 |  |  |  |
|  |  | l+31 | l+35 | l+39 |  |  |  |  |  |  |  |  | l+43 | l+47 |  |  |  |  |  |  |  | l+51 | l+55 |  |  |  |
|  |  |  | m+28 | m+32 | m+36 |  |  |  |  |  |  |  |  |  | m+40 | m+44 |  |  |  |  |  |  | m+48 | m+52 |  |  |
|  |  |  | m+29 | m+33 | m+37 |  |  |  |  |  |  |  |  |  | m+41 | m+45 |  |  |  |  |  |  | m+49 | m+53 |  |  |
|  |  |  | m+30 | m+34 | m+38 |  |  |  |  |  |  |  |  |  | m+42 | m+46 |  |  |  |  |  |  | m+50 | m+54 |  |  |
|  |  |  | m+31 | m+35 | m+39 |  |  |  |  |  |  |  |  |  | m+43 | m+47 |  |  |  |  |  |  | m+51 | m+55 |  |  |
|  |  |  | n+28 | n+32 | n+36 |  |  |  |  |  |  |  |  | n+40 | n+44 |  |  |  |  |  |  |  | n+48 | n+52 |  |  |
|  |  |  | n+29 | n+33 | n+37 |  |  |  |  |  |  |  |  | n+41 | n+45 |  |  |  |  |  |  |  | n+49 | n+53 |  |  |
|  |  |  | n+30 | n+34 | n+38 |  |  |  |  |  |  |  |  | n+42 | n+46 |  |  |  |  |  |  |  | n+50 | n+54 |  |  |
|  |  |  | n+31 | n+35 | n+39 |  |  |  |  |  |  |  |  | n+43 | n+47 |  |  |  |  |  |  |  | n+51 | n+55 |  |  |

EP 2 693 678 B1

# FIG 6A

| UE Specific | | | | | | | | | | | | | | | | | | | | | | | |
|---|---|---|---|---|---|---|---|---|---|---|---|---|---|---|---|---|---|---|---|---|---|---|---|
| **PRB index** | **0** | **1** | **2** | **3** | **4** | **5** | **6** | **7** | **8** | **9** | **10** | **11** | **12** | **13** | **14** | **15** | **16** | **17** | **18** | **19** | **20** | **21** | **22** |
| ePDCCH PRBs | | | | | | | | | | | | | | | | | | | | | | | |
| UE#1 | e | e | | | | | | | | | e | e | | | | | | | | | e | e | |
| eCCE indexing | $I$ | $I+8$ | | | | | | | | | $I$ | $I+8$ | | | | | | | | | $I$ | $I+8$ | |
| UE#1 | $I+1$ | $I+9$ | | | | | | | | | $I+1$ | $I+9$ | | | | | | | | | $I+1$ | $I+9$ | |
| | $I+2$ | $I+10$ | | | | | | | | | $I+2$ | $I+10$ | | | | | | | | | $I+2$ | $I+10$ | |
| | $I+3$ | $I+11$ | | | | | | | | | $I+3$ | $I+11$ | | | | | | | | | $I+3$ | $I+11$ | |
| | $I+4$ | $I+12$ | | | | | | | | | $I+4$ | $I+12$ | | | | | | | | | $I+4$ | $I+12$ | |
| | $I+5$ | $I+13$ | | | | | | | | | $I+5$ | $I+13$ | | | | | | | | | $I+5$ | $I+13$ | |
| | $I+6$ | $I+14$ | | | | | | | | | $I+6$ | $I+14$ | | | | | | | | | $I+6$ | $I+14$ | |
| | $I+7$ | $I+15$ | | | | | | | | | $I+7$ | $I+15$ | | | | | | | | | $I+7$ | $I+15$ | |

EP 2 693 678 B1

FIG 6B

# FIG 7

obtaining information regarding first partition elements related to a first partitioning of channel resource elements carrying in downlink a configurable first control channel associated with a data channel ⎯ S71

determining a number of second partition elements related to a second partitioning of channel resource elements per first partition element ⎯ S72

determining for at least one second partition element a second-partition element index based on information regarding the first partition elements and the determined number ⎯ S73

determining for at least one third partition element related to a third partitioning of channel resource elements, a third-partition element index, wherein the second partitioning is reletad to the allocation od channel resources of the first control channel, and wherein the third partitioning is related to allocating channel resources of a second control channel ⎯ S74

# FIG 8

| obtaining information regarding which resource block carries a downlink control channel | S81 |

↓

| determining a number of control channel elements per allocated resource block | S82 |

↓

| defining at least one control channel element index based on the information regarding which resource block carries a downlink control channel and the number of control channel elements per allocated resource block | S83 |

↓

| defining at least one uplink control channel index based on the at least one control channel element index | S84 |

# FIG 9

user equipment/
base station

93 — Processor

92

Memory

91

Receiver/
Transmitter → to/from network

90

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2011137383 A1

**Non-patent literature cited in the description**

• **SESIA et al.** *LTE - The UMTS Long Term Evolution: From Theory to Practice,* 31 January 2012
• **SAMSUNG.** HARQ-ACK PUCCH Resources in Response to ePDCCH Detections. *3GPP Draft, R1-122259 A_N For ePDCCH,* 12 May 2012

• **PANTECH.** PUCCH resource allocation in response to E-PDCCH. *3GPP Draft, R1-122456,* 12 May 2012
• **ASUSTE.** PUCCH Resource Allocation Corresponding to ePDCCH. *3GPP Draft, R1-122614,* 12 May 2012